# EUROPEAN PATENT APPLICATION

(11) **EP 2 818 523 A1**
(43) Date of publication of application: **31.12.2014**
(21) Application number: 13752437.7
(22) Date of filing: 12.02.2013
(51) Int. Cl.: C09D 11/02, B41M 1/34

(54) **INK COMPOSITION FOR DECORATING NON-POROUS SUBSTRATES**

(30) Priority: 23.02.2012 ES 201230278
(71) Applicant: Torrecid, S.A., 12110 Alcora (Castellón) (ES)
(72) Inventor: CONCEPCION HEYDORN, Carlos, 12110 Alcora (Castellón) (ES); SANMIGUEL ROCHE, Francisco, 12110 Alcora (Castellón) (ES); RUIZ VEGA, Óscar, 12110 Alcora (Castellón) (ES); CORTS RIPOLL, Juan Vicente, 12110 Alcora (Castellón) (ES)
(74) Representative: Carlos Hernando, Borja
(86) International application number: PCT/ES2013/070086
(87) International publication number: WO 2013/124506

(57) **Abstract**

The present invention relates to an ink composition for decorating non-porous substrates for printing on non-porous surfaces that are subjected to heat treatment after printing, and comprising at least one organic solvent as a vehicle which is liquid at room temperature and is made up of linear or non-linear n-alkane hydrocarbons, at least one binder composition with submicrometric particles of a glass frit, and at least one ceramic pigment corresponding to the color of the ink and to the etching of the ink.

## Description

### Object of the Invention

The present invention relates to an ink composition for decorating non-porous substrates in which the surfaces of said substrates are subjected to heat treatment after printing.

The non-porous substrates are characterized by being stable during heat treatment and include, among others, materials such as glass, ceramic materials (glazed tiles, floor tiles, etc.), glass-ceramic plates, aluminum, steels and metal sheets, in general.

The present invention belongs to the sector of inks for printing on non-porous substrates.

### Description of the State of the Art

Today, there are several printing processes and various inks for decorating non-porous surfaces in general. The present invention relates to a process for printing on non-porous surfaces using inorganic inks which use ceramic pigments (mineral-based oxides and crystalline structures) and ground glass particles, referred to as frits.

In terms of processes that use inorganic inks for decorating non-porous surfaces, once printed, they are heated up until the frits of the ink melt, so that the pigments contained in said inks combine with the surface of the non-porous substrate and thus provide the printed motif with the necessary and desired permanency and inalterability with respect to common attacks and agents.

It must be highlighted that referring to the inks as inorganic inks does not exclude the fact that their composition includes organic compounds generally used as solvents or vehicles for the application of the ink and which generally evaporate when firing the non-porous substrate.

In the state of the art preceding the present invention, inks for decorating non-porous surfaces are disclosed in which their composition is typically formed by organic solvents, ceramic pigments and a glass frit. Therefore, United States patent US-5407474 discloses an ink for ceramic surfaces including an organic solvent, ceramic pigments and a glass frit. Document US-5407474 discloses deionized water or organic compounds incorporating functional groups, such as alcohol or acetone, as a solvent.

Japanese patent JP-2002-97069 in turn discloses an ink for ceramic surfaces including an organic solvent, ceramic pigments and a glass frit. Document JP-2002-97069 discloses organic compounds incorporating functional groups, such as glycol, ether and others, as a solvent.

Furthermore, Japanese patent JP-64-56776 discloses an ink for ceramic surfaces including an organic solvent, ceramic pigments and a glass frit. Document JP-64-56776 discloses organic compounds based on alcohols, ethers, esters, acetone and aromatic compounds, in which functional groups are present, as a solvent.

Likewise, international application WO2005018941 discloses an ink for ceramic surfaces including an organic solvent, ceramic pigments and a glass frit. Document WO2005018941 discloses organic compounds incorporating functional groups, such as glycol or ester, as a solvent.

The particle sizes of both the ceramic pigment and the glass frit of all these inks are small enough to prevent blocking the print heads of the inkjet printers. Likewise, all these inks have viscosities suitable for application by means of inkjet printers.

However, these inks have the drawback that the deposition rate resulting from their composition is very high, which prevents their permanency inside the printing machine with the printing being stopped for relatively short time periods, since the heads are obstructed due to the deposition of said inks.

Another additional problem is the fast drying of the ink because the drying rate of the inks with the known compositions is also very high. The drying of the ink in the groove of the print heads in short time generates a layer that tends to obstruct the print holes housed in said grooves, causing printing defects.

The objective of the present invention is to provide an ink the deposition and drying rates of which allow its permanency in the printing machine with the printing function being stopped for relatively long time periods and without obstructing the heads and also to prevent generating a layer that tends to obstruct the print holes housed in the grooves of the print heads, causing printing defects on the surface of the non-porous substrates to be decorated.

### Description of the Invention

The present invention relates to an ink composition for non-porous surfaces including an organic solvent, ceramic pigments and a glass frit. As a solvent, an organic solvent is used as a vehicle which is liquid at room temperature and is made up of linear or non-linear n-alkane hydrocarbons and which allows overcoming the drawbacks described in the state of the art.

The organic solvent is preferably made up of a mixture of C₁₄ n-alkane and C₁₅-C₂₀ n-alkane hydrocarbons; or by a mixture of C₁₄ n-alkane and C₁₈ n-alkane hydrocarbons; or by a mixture of C₁₄ n-alkane and C₁₈ n-alkane hydrocarbons and naphthenic oil; or by a mixture of C₁₄ n-alkane and C₁₅-C₂₀ n-alkane hydrocarbons and naphthenic oil; or by a mixture of C₁₄ n-alkane, C₁₈ n-alkane hydrocarbons and the linear C₉-C₁₁ n-alkane hydrocarbon; or by a mixture of C₁₄ n-alkane hydrocarbons and linear C₉-C₁₁ n-alkane hydrocarbon; or by a mixture of n-alkane C₁₄ and C₁₈ n-alkane hydrocarbons and linear C₉-C₁₁ n-alkane hydrocarbon and naphthenic oil. The ink according to the invention is characterized in that it has a deposition rate less than 0.1% and also has a drying rate less than 2% for 10 minutes and less than 9% for 1 hour.

The deposition rate is determined with an optical analyzer for analyzing liquid dispersion stability and instability (Turbiscan or the like), and the results are expressed as % by weight of ink deposited in an hour. The measurement is taken after 3 days and the value is divided by 72 hours which are the amount of time in 3 days. In an ink according to the present invention, the deposition rate is less than 0.1% and will preferably be comprised between 0.013 and 0.06%.

On the other hand, to determine the drying rate, a specific amount of ink placed in a beaker is weighed by means of an electronic thermobalance and is kept at 30°C. Weighings are performed at 10 and 60 minutes in order to determine the amount of solvent that has evaporated in those time periods. The result is expressed as % by weight of solvent evaporated at 10 minutes and at 60 minutes. In an ink according to the present invention, the drying rate is less than 2% for 10 minutes and less than 10% for 1 hour and preferably, 8% for 1 hour and comprised between 0.5% and 1.5% for 10 minutes.

The percentage by weight of the linear or non-linear n-alkane hydrocarbon-based organic solvent is comprised between 35% and 55% of the total weight

The ink thus characterized allows significant cost savings firstly by improving printing quality, maintaining said quality uniform over time, and secondly by preventing part of the ink from being rendered useless as a result of fast deposition and/or drying.

Once suitable deposition and drying rates are achieved, an additional advantage is derived from the possibility of using the stand-by function of the printing machines, which allows reducing power consumption of said machines.

Another additional advantage results from the use of ceramic pigments and frits that are free of lead and other hazardous compounds, an efficient protection in relation to safety and environmental protection thus being achieved.

According to the invention, the ink composition is characterized in that the size of the submicrometric particles contained in both the ceramic pigments and the glass frit is less than 0.40 micrometers.

Likewise, the percentage by weight of the glass frit is comprised between 20% and 35% of the total weight and made up primarily of Si, B and Zn oxides and salts, or by Si, B, Bi and Zn oxides and salts. The specific composition of the glass frit is selected depending on the required characteristics, depending primarily on the desired acid and base resistance, on the required meting temperature and on the coefficient of expansion of the support.

In relation to the ceramic pigments used for obtaining the different colors or effects, it must be highlighted that the pigments are selected from simple oxides and/or mixed oxides and/or crystalline structures and that the percentage by weight of said ceramic pigments is comprised between 5% and 25% of the total weight. Furthermore, according to the invention the ink can comprise at least one drying and polarizing agent, generally a long-chain alcohol, with boiling point comprised between 150 and 220°C, the percentage by weight of which is less than 5% of the total weight.

Likewise and also according to the invention, the ink can comprise at least one binding agent, one dispersing agent or hyperdispersant, one thixotroping agent and/or one wetting agent or humectant.

Cellulose derivatives, rosin resins, ketone resins, polyamides, among others, are used as a binding agent provided that they are soluble and compatible with the liquid vehicle of the ink. Polyamide or a mixture of polyamide and cellulose derivatives (ethyl cellulose) is preferably used as a binding agent.

The dispersing agent is characterized by being formed preferably by carboxylic acid copolymers or hyperdispersants and/or polymeric fatty esters. Likewise, the ink can preferably include urea derivatives, with additions between 1 and 0.1%, as a thixotroping agent in its composition.

The wetting agent or humectant is preferably polyether-modified polydimethylsiloxane with additions between 1 and 0.05%, preferably between 0.5 and 0.05%. The ink according to the invention can comprise additional components typically selected from cross-linking agents, anti-foaming agents, rheological control agents, anti-corrosion agents, coalescing agents, pH control agents and biocides.

After printing, i.e., once the ink is applied on the non-porous substrate or substrates, the surfaces of said substrates are subjected to heat treatment. The heat treatment is necessary so that the ink adheres to the substrate and the end color is generated. The adherence that is achieved with the heat treatment is such that the decoration made with the inks is permanent and resistant to abrasion, cleaning agents, the elements, etc. In order to achieve said adherence, the heat treatment is preferably performed in temperatures in the order of 500°C.

### Preferred Embodiments

To complete the description that is being made and for the purpose of aiding to better understand the features thereof, several embodiments of the inks for providing color designs according to the invention accompany the present specification.

All the indicated embodiments are provided in an illustrative and non-limiting way.

### Red Inks:

Three compositions of red ink according to the present invention are indicated in the table below, the ranges of the percentage by weight of the components used in each of the different compositions being indicated:

| Agent/Function | Component | 1 | 2 | 3 |
|---|---|---|---|---|
| Ceramic | iron oxide | 14-18% | 14-18% | 14-18% |

| pigment 1 | | | | |
|---|---|---|---|---|
| | | | | |
| Frit 1 | Si, B and Zn oxides | 28-30% | | 28-30% |
| Frit 2 | Si, Bi, B and Zn oxides | | 28-30% | |
| | | | | |
| Solvent 1 | C₁₈ n-alkane hydrocarbon | 18-22% | 5-10% | 5-10% |
| Solvent 2 | C₁₄ n-alkane hydrocarbon | 18-22% | 15-20% | 15-20% |
| Solvent 3 | linear C₉-C₁₁ n-alkane hydrocarbon | 5-8% | | |
| Solvent 4 | naphthenic oil | | 15-20% | 15-20% |

With said compositions, the red inks according to the invention have the following physical properties:

| Red ink | 1 | 2 | 3 |
|---|---|---|---|
| Deposition rate | 0.03 | 0.02 | 0.02 |
| Drying rate for 10 minutes | 1.2 | 1.1 | 1.1 |
| Drying rate for 1 hour | 7 | 6 | 6 |

According to the invention, the previously characterized red inks can comprise at least the following agents of which the range of their composition by weight is indicated:

| | | | | |
|---|---|---|---|---|
| Drying and polarizing agent | octanol | 3-5% | 3-5% | 3-5% |
| | | | | |
| Binding agent 2 | polyamide | 0.5-1.5% | 0.5-1.5% | 0.5-1.5% |
| | | | | |
| Dispersing | carboxylic acid | 2-4% | 2-4% | 2-4% |
| agent 1 | copolymers | | | |
| | | | | |
| Thixotroping agent | urea derivatives | 0.1-1% | 0.1-1% | 0.1-1% |
| | | | | |
| Wetting agent | polyether-modified polydimethylsiloxane | 0.05-1% | 0.05-1% | 0.05-1% |

The red inks with the indicated components are prepared by means of conventional methods generally used in the industry.

### Blue Inks:

Tow compositions of blue ink according to the present invention are indicated in the table below, the ranges of the percentage by weight of the components used in each of the different compositions being indicated:

| Agent/Function | Component | 1 | 2 |
|---|---|---|---|
| Ceramic pigment 2 | cobalt spinel | 10-14% | 10-14% |
| | | | |
| Frit 1 | Si, B and Zn oxides | 30-35% | |
| Frit 2 | Si, Bi, B and Zn oxides | | 30-35% |
| | | | |
| Solvent 1 | C₁₈ n-alkane hydrocarbon | 8-12% | 8-12% |
| Solvent 2 | C₁₄ n-alkane hydrocarbon | 15-20% | 15-20% |
| Solvent 3 | naphthenic oil | 15-20% | 15-20% |

With said compositions, the blue inks according to the invention have the following physical properties:

| Blue ink | 1 | 2 |
|---|---|---|
| Deposition rate | 0.03 | 0.03 |
| Drying rate for 10 minutes | 1.1 | 1.1 |
| Drying rate for 1 hour | 6 | 6 |

According to the invention, the previously characterized blue inks can comprise at least the following agents:

| | | | |
|---|---|---|---|
| Drying and polarizing agent | octanol | 3-5% | 3-5% |
| | | | |
| Binding agent 2 | polyamide | 0.5-1.5% | 0.5-1.5% |
| | | | |
| Dispersing agent 1 | carboxylic acid copolymers | 2-4% | 2-4% |
| | | | |
| Thixotroping agent | urea derivatives | 0.1-1% | 0.1-1% |
| | | | |
| Wetting agent | polyether-modified polydimethylsiloxane | 0.05-1% | 0.05-1% |

Likewise, the blue inks with the indicated components are prepared by means of conventional methods generally used in the industry.

### Black Inks:

Four compositions of black ink according to the present invention are indicated in the table below, the components used in each of the different compositions being indicated:

| Agent/Function | Component | 1 | 2 | 3 | 4 |
|---|---|---|---|---|---|
| Ceramic pigment 3 | spinel black | 15-20% | 15-20% | 15-20% | 15-20% |
| | | | | | |
| Frit 1 | Si, B and Zn oxides | 28-32% | 28-32% | 28-32% | |
| Frit 2 | Si, Bi, B and Zn oxides | | | | 28-32% |
| | | | | | |
| Solvent 1 | C₁₈ n-alkane hydrocarbon | | 18-22% | 8-12% | |
| Solvent 2 | C₁₄ n-alkane hydrocarbon | 28-32% | 18-22% | 15-20% | 30-34% |
| Solvent 3 | linear C₉-C₁₁ n-alkane hydrocarbon | | | 2-5% | |
| Solvent 4 | C₁₅-C₂₀ n-alkane hydrocarbon | 8-12% | | | 6-10% |
| Solvent 5 | naphthenic oil | | | 15-20% | |

With said compositions, the black inks according to the invention have the following physical properties:

| Black ink | 1 | 2 | 3 | 4 |
|---|---|---|---|---|
| Deposition rate | 0.03 | 0.02 | 0.04 | 0.02 |
| Drying rate for 10 minutes | 0.8 | 0.5 | 1.4 | 1 |
| Drying rate for 1 hour | 6 | 4.5 | 9 | 8.8 |

According to the invention, the previously characterized black inks can comprise at least the following agents:

| Agent/Function | Component | 1 | 2 | 3 | 4 |
|---|---|---|---|---|---|
| Drying and polarizing agent | octanol | 3-5% | 3-5% | 3-5% | 3-5% |
| | | | | | |
| Binding agent 1 | polyamide and cellulose derivatives | | | 0.5-1.5% | |
| | (ethyl cellulose) | | | | |
| Binding agent 2 | polyamide | 0.5-1.5% | 0.5-1.5% | 0.5-1.5% | 0.5-1.5% |
| | | | | | |
| Dispersing agent 1 | carboxylic acid copolymers | 2-4% | 2-4% | 2-4% | 2-4% |
| | | | | | |
| Thixotroping agent | urea derivatives | 0.1-1% | 0.1-1% | 0.1-1% | 0.1-1% |
| | | | | | |
| Wetting agent | polyether-modified polydimethylsiloxane | 0.05-1% | 0.05-1% | | 0.05-1% |

In this case, the black inks with the indicated components are also prepared by means of conventional methods generally used in the industry.

### Yellow Inks:

Two compositions of yellow ink according to the present invention are indicated in the table below, the components used in each of the different compositions being indicated:

| Agent/Function | Component | 1 | 2 |
|---|---|---|---|
| Ceramic pigment 4 | Cr and Sb titanate with rutile structure | 8-12% | 8-12% |
| | | | |
| Frit 1 | Si, B and Zn oxides | 30-35% | |
| Frit 2 | Si, Bi, B and Zn oxides | | 30-35% |
| | | | |
| Solvent 1 | C₁₈ n-alkane | 8-12% | 8-12% |
| | hydrocarbon | | |
| Solvent 2 | C₁₄ n-alkane hydrocarbon | 34-40% | 15-20% |
| Solvent 3 | naphthenic oil | | 15-20% |

With said compositions, the yellow inks according to the invention have the following physical properties:

| Yellow ink | 1 | 2 |
|---|---|---|
| Deposition rate | 0.02 | 0.03 |
| Drying rate for 10 minutes | 1.3 | 1.3 |
| Drying rate for 1 hour | 8 | 8 |

According to the invention, the previously characterized yellow inks can comprise at least the following agents:

| Agent/Function | Component | 1 | 2 |
|---|---|---|---|
| Drying and polarizing agent | octanol | 3-5% | 3-5% |
| | | | |
| Binding agent 1 | polyamide and cellulose derivatives (ethyl cellulose) | 0.5-1.5% | |
| Binding agent 2 | polyamide | 0.5-1.5% | 0.5-1.5% |
| | | | |
| Dispersing agent 1 | carboxylic acid copolymers | | 2-4% |
| Dispersing agent 1 | polymeric fatty esters | 2-4% | |
| | | | |
| Thixotroping agent | urea derivatives | 0.1-1% | 0.1-1% |
| Wetting agent | polyether-modified polydimethylsiloxane | 0.05-1% | 0.05-1% |

The yellow inks with the indicated components are prepared by means of conventional methods generally used in the industry.

### White Inks:

Four compositions of white ink according to the present invention are indicated in the table below, the components used in each of the different compositions being indicated:

| Agent/Function | Component | 1 | 2 | 3 | 4 |
|---|---|---|---|---|---|
| Ceramic pigment 5 | Ti oxide with rutile structure | 12-16% | 12-16% | 12-16% | 12-16% |
| | | | | | |
| Frit 1 | Si, B and Zn oxides | 30-34% | 30-34% | | |
| Frit 1 | Si, B and Zn oxides | | | 30-34% | 30-34% |
| | | | | | |
| Solvent 1 | C₁₈ n-alkane hydrocarbon | 9-14% | 9-14% | 9-14% | |
| Solvent 2 | C₁₄ n-alkane hydrocarbon | 32-37% | 28-33% | 15-20% | 32-37% |
| Solvent 3 | linear C₉-C₁₁ n-alkane hydrocarbon | | 5-6% | | 5-6% |
| Solvent 4 | naphthenic oil | | | 15-20% | |

With said compositions, the white inks according to the invention have the following physical properties:

| White ink | 1 | 2 | 3 | 4 |
|---|---|---|---|---|
| Deposition rate | 0.03 | 0.01 | 0.02 | 0.01 |
| Drying rate for 10 minutes | 0.7 | 1.3 | 0.6 | 1.4 |
| Drying rate for 1 hour | 6 | 9.8 | 5.5 | 9.2 |

According to the invention, the previously characterized white inks can comprise at least the following agents:

| Agent/Function | Component | 1 | 2 | 3 | 4 |
|---|---|---|---|---|---|
| Drying and polarizing agent | octanol | 3-5% | 3-5% | 3-5% | 3-5% |
| | | | | | |
| Binding agent 2 | polyamide | 0.5-1.5% | 0.5-1.5% | 0.5-1.5% | 0.5-1.5% |
| | | | | | |
| Dispersing agent 1 | carboxylic acid copolymers | 2-4% | 2-4% | 2-4% | 2-4% |
| | | | | | |
| Thixotroping agent | urea derivatives | 0.1-1% | 0.1-1% | 0.1-1% | 0.1-1% |
| | | | | | |
| Wetting agent | polyether-modified polydimethylsiloxane | 0.05-1% | 0.05-1% | | 0.05-1% |

The white inks with the indicated components are prepared by means of conventional methods generally used in the industry.

### Green Inks:

Two compositions of green ink according to the present invention are indicated in the table below, the components used in each of the different compositions being indicated:

| Agent/Function | Component | 1 | 2 |
|---|---|---|---|
| Ceramic pigment 6 | TiCoZnNi spinel | 10-16% | 10-16% |
| Frit 1 | Si, B and Zn oxides | 28-33% | |
| Frit 2 | Si, Bi, B and Zn oxides | | 30-35% |
| | | | |
| Solvent 1 | C₁₈ n-alkane hydrocarbon | 6-9% | 6-9% |
| Solvent 2 | C₁₄ n-alkane hydrocarbon | 15-20% | 34-39% |
| Solvent 3 | naphthenic oil | 15-20% | |

With said compositions, the green inks according to the invention have the following physical properties:

| Green ink | 1 | 2 |
|---|---|---|
| Deposition rate | 0.03 | 0.04 |
| Drying rate for 10 minutes | 1 | 1.1 |
| Drying rate for 1 hour | 6.2 | 6.1 |

According to the invention, the previously characterized green inks can comprise at least the following agents:

| Agent/Function | Component | 1 | 2 |
|---|---|---|---|
| Drying and polarizing agent | octanol | 3-5% | 3-5% |
| | | | |
| Dispersing agent 1 | carboxylic acid copolymers | 2-4% | 2-4% |
| | | | |
| Thixotroping agent | urea derivatives | 0.1-1% | 0.1-1% |
| | | | |
| Wetting agent | polyether-modified polydimethylsiloxane | 0.05-1% | 0.05-1% |

The green inks with the indicated components are prepared by means of conventional methods generally used in the industry.

### Etching Inks:

Two compositions of etching ink according to the present invention are indicated in the table below, the components used in each of the different compositions being indicated:

| Agent/Function | Component | 1 | 2 |
|---|---|---|---|
| Ceramic pigment 7 | zinc oxide | 10-25% | |
| Ceramic pigment 8 | Si, Na and B oxides | | 10-25% |
| | | | |
| Frit 1 | Si, B and Zn oxides | 20-25% | 20-25% |
| Frit 2 | Si, Bi, B and Zn oxides | | |
| | | | |
| Solvent 1 | C₁₈ n-alkane hydrocarbon | 6-10% | 6-10% |
| Solvent 2 | C₁₄ n-alkane hydrocarbon | 32-36% | 32-36% |
| Solvent 3 | linear C₉-C₁₁ n-alkane hydrocarbon | 15-20% | 5-8% |
| Solvent 4 | naphthenic oil | 15-20% | |

With said compositions, the etching inks according to the invention have the following physical properties:

| Etching ink | 1 | 2 |
|---|---|---|
| Deposition rate | 0.04 | 0.04 |
| Drying rate for 10 minutes | 0.7 | 0.7 |
| Drying rate for 1 hour | 6.5 | 6 |

According to the invention, the previously characterized etching inks can comprise at least the following agents:

| Agent/Function | Component | 1 | 2 |
|---|---|---|---|
| Drying and polarizing agent | octanol | 3-5% | 3-5% |
| | | | |
| Binding agent 2 | polyamide | 0.5-1.5% | 0.5-1.5% |
| | | | |
| Dispersing agent 1 | carboxylic acid copolymers | 2-4% | 2-4% |
| | | | |
| Thixotroping agent | urea derivatives | 0.1-1% | 0.1-1% |
| | | | |
| Wetting agent | polyether-modified polydimethylsiloxane | 0.05-1% | 0.05-1% |

The etching inks with the indicated components are prepared by means of conventional methods generally used in the industry.

## Claims

1. An ink composition for non-porous substrates, for printing on non-porous surfaces of the type that are subjected to heat treatment after printing, **characterized in that** the composition comprises:
a. At least one organic solvent as a vehicle which is liquid at room temperature and is made up of linear or non-linear n-alkane hydrocarbons,
b. At least one binder composition with submicrometric particles of a glass frit, and
c. At least one ceramic pigment corresponding to the color of the ink and to the etching of the ink.

2. The ink composition according to claim 1, **characterized in that** it has a deposition rate less than 0.1%.

3. The ink composition according to claim 2, **characterized in that** it has a deposition rate preferably comprised between 0.013% and 0.06%.

4. The ink composition according to claim 1, **characterized in that** the drying rate is less than 2% for 10 minutes and less than 10% for 1 hour.

5. The ink composition according to claim 4, **characterized in that** the drying rate is preferably 8% for 1 hour and is comprised between 0.5% and 1.5% for 10 minutes

6. The ink composition according to claim 1, **characterized in that** the size of the submicrometric particles of the glass frit is less than 0.40 micrometers.

7. The ink composition according to claim 1, **characterized in that** the percentage by weight of the glass frit is comprised between 20% and 35% of the total weight.

8. The ink composition according to claim 7, wherein the glass frit is made up primarily of Si, B and Zn oxides and salts.

9. The ink composition according to claim 7, wherein the glass frit is made up primarily of Si, B, Bi and Zn oxides and salts.

10. The ink composition according to claim 1, **characterized in that** the size of the submicrometric particles of the ceramic pigments is less than 0.40 micrometers.

11. The ink composition according to claim 1, **characterized in that** the percentage by weight of the ceramic pigments is comprised between 5% and 25% of the total weight.

12. The ink composition according to claim 1, **characterized in that** the ceramic pigments are selected from simple oxides and/or mixed oxides and/or crystalline structures.

13. The ink composition according to claim 11, **characterized in that** the percentage by weight of the ceramic pigment for red inks is from 14 to 18% of the total weight.

14. The ink composition according to claim 13, **characterized in that** the ceramic pigment for red inks is iron oxide.

15. The ink composition according to claim 11, **characterized in that** the percentage by weight of the ceramic pigment for blue inks is from 10 to 14% of the total weight.

16. The ink composition according to claim 15, **characterized in that** the ceramic pigment for blue inks is cobalt spinel.

17. The ink composition according to claim 11, **characterized in that** the percentage by weight of the ceramic pigment for black inks is preferably comprised between 15% and 20% of the total weight.

18. The ink composition according to claim 17, **characterized in that** the ceramic pigment for black inks is spinel black.

19. The ink composition according to claim 11, **characterized in that** the percentage by weight of the ceramic pigment for yellow inks is from 8 to 12% of the total weight.

20. The ink composition according to claim 19, **characterized in that** the ceramic pigment for yellow inks is Cr and Sb titanate with rutile structure.

21. The ink composition according to claim 11, **characterized in that** the percentage by weight of the ceramic pigment for white inks is from 12 to 16% of the total weight.

22. The ink composition according to claim 21, **characterized in that** the ceramic pigment for white inks is Ti oxide with rutile structure.

23. The ink composition according to claim 11, **characterized in that** the percentage by weight of the ceramic pigment for green inks is from 10 to 16% of the total weight.

24. The ink composition according to claim 23, **characterized in that** the ceramic pigment for green inks is titanium, cobalt, zinc and nickel spinel.

25. The ink composition according to claim 11, **characterized in that** the percentage by weight of the ceramic pigment for etching inks is from 10 to 25% of the total weight.

26. The ink composition according to claim 25, **characterized in that** the ceramic pigment for etching inks is zinc oxide.

27. The ink composition according to claim 25, **characterized in that** the ceramic pigment for etching inks is a mixture of Si, Na and B oxides.

28. The ink composition according to claim 1, **characterized in that** the percentage by weight of the organic solvent is comprised between 35% and 55% of the total weight.

29. The ink composition according to claim 28, **characterized in that** the organic solvent is made up of a mixture of the following n-alkane hydrocarbons: C₁₄ n-alkane and C₁₅-C₂₀ n-alkane.

30. The ink composition according to claim 28, **characterized in that** the organic solvent is made up of a mixture of the following n-alkane hydrocarbons: C₁₄ n-alkane and C₁₈ n-alkane.

31. The ink composition according to claim 28, **characterized in that** the organic solvent is made up of a mixture of the following n-alkane hydrocarbons: C₁₄ n-alkane and linear C₃-C₁₁ n-alkane hydrocarbons.

32. The ink composition according to claim 30, **characterized in that** the organic solvent incorporates linear C₉-C₁₁ n-alkane hydrocarbons.

33. The ink composition according to claim 29 or 30 or 32, **characterized in that** the organic solvent incorporates naphthenic oil.

34. The ink composition according to claim 1, **characterized in that** it comprises at least one drying and polarizing agent.

35. The ink composition according to claim 34, **characterized in that** the drying and polarizing agent is a long-chain alcohol with boiling point comprised between 150 and 220°C

36. The ink composition according to claim 35, **characterized in that** the drying and polarizing agent is octanol.

37. The ink composition according to claim 34, **characterized in that** the percentage by weight of the drying and polarizing agent is less than 5% of the total weight.

38. The ink composition according to claim 1, **characterized in that** it comprises at least one binding agent.

39. The ink composition according to claim 38, **characterized in that** the binding agent is polyamide.

40. The ink composition according to claim 38, **characterized in that** the binding agent is a mixture of polyamide and cellulose derivatives.

41. The ink composition according to claim 1, **characterized in that** it comprises at least one dispersing agent.

42. The ink composition according to claim 41, **characterized in that** the dispersing agent is carboxylic acid copolymers or hyperdispersants and/or polymeric fatty esters.

43. The ink composition according to claim 1, **characterized in that** it comprises at least one thixotroping agent.

44. The ink composition according to claim 43, **characterized in that** the thixotroping agent is urea derivatives.

45. The ink composition according to claim 1, **characterized in that** it comprises at least one wetting agent.

46. The ink composition according to claim 45, **characterized in that** the wetting agent is polyether-modified polydimethylsiloxane.

47. The ink composition according to claim 1, **characterized in that** it comprises additional components selected from cross-linking agents, anti-foaming agents, rheological control agents, anti-corrosion agents, coalescing agents, pH control agents and biocides.
